# EUROPÄISCHE PATENTSCHRIFT

(11) **EP 2 494 228 B1**
(45) Veröffentlichungstag und Bekanntmachung des Hinweises auf die Patenterteilung: **02.07.2014**
(21) Anmeldenummer: 10786985.1
(22) Anmeldetag: 07.10.2010
(51) Int. Cl.: F16D 29/00

(54) **HYDROSTATISCHER KUPPLUNGSAKTOR**
HYDROSTATIC CLUTCH ACTUATOR
ACTIONNEUR D'EMBRAYAGE HYDROSTATIQUE

(30) Priorität: 29.10.2009 DE 102009051244; 25.02.2010 DE 102010009297
(43) Veröffentlichungstag der Anmeldung: 05.09.2012
(73) Patentinhaber: Schaeffler Technologies GmbH & Co. KG, 91074 Herzogenaurach (DE)
(72) Erfinder: GRAMANN, Matthias, 77871 Renchen (DE); KNEISSLER, Markus, 77830 Bühlertal (DE); BOTIOV, Julian, 77815 Bühl (DE)
(86) Internationale Anmeldenummer: PCT/DE2010/001183
(87) Internationale Veröffentlichungsnummer: WO 2011/050766

(56) Entgegenhaltungen:
- EP-A1- 1 612 446
- EP-A2- 1 908 990
- WO-A1-2005/078303
- WO-A1-2005/080817
- WO-A1-2008/009547
- DE-A1-102006 014 866
- US-A1- 2005 205 377

## Beschreibung

Die Erfindung betrifft einen Hydrostataktor mit einem einen Drehantrieb in eine Axialbewegung wandelnden Getriebe sowie mit einem das Getriebe drehantreibenden Elektromotor mit einem Stator und einem Rotor, mit einem Geberzylinder enthaltend ein Gehäuse und einen in dem Gehäuse durch das Getriebe axial verlagerbaren, eine Druckkammer mit Druck beaufschlagenden Kolben,.

Ein gattungsgemäßer Hydrostataktor ist z.B aus der EP 16 12 446 A1 bekannt. Ein weiteren in Form eines hydrostatischen Kupplungsaktors ist aus der DE 197 00 935 A1 bekannt. Hierbei wird ein Kolben eines Geberzylinders mittels eines Elektromotors angetrieben, wobei die Drehbewegung des Elektromotors mittels eines Getriebes in Form eines Schneckengetriebes in eine axiale Bewegung gewandelt wird. Der Kolben wird dabei mittels eines an dem Schneckenrad angeordneten Exzenterbolzens angetrieben.

Die Aufgabe der Erfindung ist die Verbesserung und Weiterentwicklung derartiger Hydrostataktoren insbesondere vor dem Hintergrund einer Erhöhung des Wirkungsgrades, der Verringerung des Bauraumbedarfs und der Erhöhung des Betriebsdrucks des Geberzylinders.

Die Aufgabe wird durch einen Hydrostataktor mit einem einen Drehantrieb in eine Axialbewegung wandelnden Getriebe sowie mit einem das Getriebe drehantreibenden Elektromotor mit einem Stator und einem Rotor, mit einem Geberzylinder enthaltend ein Gehäuse und einen in dem Gehäuse durch das Getriebe axial verlagerbaren, eine Druckkammer mit Druck beaufschlagenden Kolben gelöst, wobei der Kolben bezogen auf eine Drehachse des Elektromotors axial zwischen Druckammer und Elektromotor angeordnet ist, bei Verlagerung des Kolbens Druck in der Druckkammer aufgebaut wird, und der Hydrostataktor wenigstens zur Betätigung einer Reibungskupplung anwendbar ist und wobei in diesem Hydrostataktor ein Nachlaufbehälter für ein hydrostatisches Druckmittel bauraumneutral in dem von dem Elektromotor, dem Getriebe und dem Gehäuse des Geberzylindes vorgegebenen Bauraums integriert ist..

Alternativ wird die Aufgabe durch einen Hydrostataktor mit einem einen Drehantrieb in eine Axialbewegung wandelnden Getriebe sowie mit einem das Getriebe drehantreibenden Elektromotor mit einem Stator und einem Rotor, mit einem Geberzylinder enthaltend ein Gehäuse und einen in dem Gehäuse durch das Getriebe axial verlagerbaren, eine Druckkammer mit Druck beaufschlagenden Kolben gelöst, wobei die Druckkammer bezogen auf eine Drehachse des Elektromotors axial zwischen Kolben und Elektromotor angeordnet ist. Bei Verwendung einer derartigen Anordnung wird bei der Komprimierung der Druckkammer durch den Kolben das Gehäuse des Geberzylinders in Richtung Elektromotor belastet. Dabei wird der Kolben gegen den Elektromotor gezogen, indem das Getriebe auf den Kolben eine Zugkraft ausübt. Beispielsweise kann eine Getriebespindel des Getriebes mit dem Kolben einteilig verbunden sein. Dabei hat es sich als vorteilhaft erwiesen, wenn der Kolben als Ringkolben in einer ringförmig ausgebildeten Druckkammer verlagert wird.

Die vorgeschlagenen Hydrostataktoren können neben einer Anwendung zur Betätigung einer Reibungskupplung für weitere Bewegungsvorgänge insbesondere in einem Kraftfahrzeug eingesetzt werden, bei dem hohe Kräfte mit einem vergleichsweise kleinen Elektromotor umgesetzt werden müssen. Hierzu zählen beispielsweise und nicht abschließend die Betätigung von Bremsen wie Betriebs- und Feststellbremsen, Getriebebetätigungen, Parksperren, Tür- und Klappenbetätigungen und dergleichen.

Als Getriebe eignen sich Spindelgetriebe mit einer den Kolben axial antreibenden und wahlweise mit diesem einteilig verbundenen Spindel und einer Spindelmutter, die aus einer Hülse gebildet sein kann, die direkt von dem Rotor des Elektromotors angetrieben oder aus diesem gebildet sein kann. Weiterhin kann zur Verminderung der Reibung die Spindel als Kugelumlaufspindel vorgesehen sein. Es hat sich als besonders vorteilhaft erwiesen, wenn das Getriebe als Planetenwälzgetriebe enthaltend eine den Kolben axial verlagernde, entlang der Drehachse angeordnete Gewindespindel, eine koaxial zu dieser angeordnete drehangetriebene Hülse und zwischen diesen abwälzende Planetenräder gebildet und beispielsweise in der EP 0 320 621 A1 in grundsätzlicher Weise offenbart ist. In vorteilhafter Weise kann bei Verwendung eines Planetenwälzgetriebes durch dessen hohe Übersetzung ein hoch drehender, vergleichsweise bezüglich seiner Leistung schwach ausgelegter Elektromotor verwendet werden.

Insbesondere zur Verringerung des axialen Bauraums kann das Getriebe wie Planetenwälzgetriebe radial innerhalb des Rotors angeordnet sein. Dabei kann der Rotor auf dem Getriebe, beispielsweise der Hülse eines Planetenwälzgetriebes gelagert sein. Dabei kann das komplette Getriebe in dem Bauraum des Rotors untergebracht sein. Dabei können die Funktionen des Rotors und der Hülse miteinander kombiniert sein. Beispielsweise kann ein Blechaufbau des Rotors entfallen, indem die Permanentmagnete des Rotors direkt an der Hülse aufgenommen, beispielsweise mit dieser verklebt werden. Im Weiteren kann das Getriebe in den Rotor integriert sein, indem beispielsweise der Rotor die Innenverzahnung für die Planeten eines Planetenwälzgetriebes bildet.

Zur Erzielung besonders kompakter Hydrostataktoren, können die Bauteile beziehungsweise Baugruppen des Hydrostataktors ineinander geschachtelt sein. Beispielsweise kann ein die Druckkammer bildender Gehäuseabschnitt des Geberzylindergehäuses radial außerhalb des Getriebes angeordnet sein und der Elektromotor axial benachbart zu der Druckkammer angeordnet sein. Als vorteilhaft hat sich hierbei erwiesen, wenn der Elektromotor einen kleineren Durchmesser als der Außendurchmesser der Druckkammer, beziehungsweise des diese bildenden Gehäuseabschnitts aufweist.

Es hat sich auch für den alternativen Hydrostataktor weiterhin als vorteilhaft gezeigt, wenn in den Hydrostataktor ein Nachlaufbehälter für ein hydrostatisches Druckmittel in bevorzugter Weise bauraumneutral, das heißt, in einen von dem Elektromotor, dem Getriebe und dem Gehäuse des Geberzylinders vorgegebenen, vorzugsweise um eine Drehachse des Elektromotors zylindrisch angeordneten Bauraum integriert ist.

Der Nachlaufbehälter kann über eine sogenannte Schnüffelbohrung mit der Druckkammer verbunden sein, die im entspannten Zustand des Kolbens mit dieser verbunden und bei Druckbeaufschlagung der Druckkammer durch den Kolben verschlossen wird. Der Nachlaufbehälter kann bei einer im eingebauten Zustand über der Druckkammer vorgesehenen Anordnung mit der Umgebung im Druckgleichgewicht stehen, so dass das Druckmittel hydrostatisch nachläuft, oder mittels einer Membran wie Balgen oder einer Druckfeder vorgespannt sein, so dass das Druckmittel bei Bedarf unter leichtem Überdruck in die Druckkammer nachgeführt wird.

Als besonders vorteilhaft hat sich bei einer ringförmig ausgebildeten Druckkammer erwiesen, wenn der Nachlaufbehälter radial innerhalb der Druckkammer beispielsweise in dem von der Kolbenstange und dem Innenumfang des Gehäuses des Geberzylinders freigelassenen Bauraum angeordnet ist. Dabei kann die Kolbenstange beziehungsweise eine mit dieser fest verbundene oder einteilig ausgebildete Gewindespindel des Getriebes während einer Verlagerung des Kolbens zumindest teilweise axial in den Nachlaufbehälter eingreifen.

Gemäß einer alternativen Ausführungsform kann der Nachlaufbehälter radial außerhalb einer ringförmig ausgebildeten Druckkammer angeordnet sein. Dabei kann der Durchmesser des Nachlaufbehälters radial auf den Außendurchmesser des Elektromotors oder eines anderen bauraumbedingt den Durchmesser des Hydrostataktors vorgebenden Bauteils beschränkt werden.

Zur Abdichtung einer Leckage des Geberzylinders nach außen kann zwischen dem Gehäuse und dem Kolben eine Leckagedichtung, beispielsweise eine Lippendichtung oder ein Faltenbalg vorgesehen sein. Alternativ kann die Leckagedichtung zwischen dem Gehäuse und dem Getriebe und/oder zwischen einer Getriebespindel des Getriebes und dem Gehäuse angeordnet sein.

Gemäß einer vorteilhaften Ausführungsvariante eines Hydrostataktors können das Gehäuse des Geberzylinders und die Hülse des Planetenwälzgetriebes einteilig, beispielsweise aus Blech gezogen ausgebildet sein. Dabei können der Geberzylinder und das Planetenwälzgetriebe als Baueinheit ausgebildet sein.

In dem Hydrostataktor ist eine Sensoreinrichtung vorgesehen, die zumindest die Drehbewegung des Elektromotors erfasst und die Daten für die Kommutierung des vorzugsweise als bürsten loser Elektromotor vorgesehenen Elektromotors liefert. Zusätzlich kann mittels zusätzlicher oder der in der Sensoreinrichtung vorgesehenen Sensoren der Axialweg des Kolbens erfasst und ermittelt werden. Weiterhin kann die Sensoreinrichtung zur Ermittlung des Schlupfs des Planetenwälzgetriebes dienen. Die Daten werden dabei in ein Steuergerät des Hydrostataktors eingelesen und in diesem verarbeitet. Dabei kann die Sensoreinrichtung die Signale direkt auf das Steuergerät übertragen oder über eine Vorortelektronik verfügen, die entsprechende Signale aufbereitet und gewandelt auf das Steuergerät überträgt. Das Steuergerät kann in den Hydrostataktor, beispielsweise in den Elektromotor integriert oder an diesen angebaut sein. Die Anordnung der Sensoreinrichtung kann an der der das Gehäuse des Geberzylinders aufnehmenden Stirnseite gegenüberliegenden Stirnseite oder an der das Gehäuse des Geberzylinders aufnehmenden Stirnseite, beispielsweise zwischen dem Gehäuse des Geberzylinders und dem Gehäuse des Elektromotors angeordnet sein.

Die Erfindung wird anhand der in den Figuren 1 bis 7 dargestellten Ausführungsbeispiele näher erläutert. Diese zeigen:
- Figur 1: einen Schnitt durch einen Hydrostataktor,
- Figur 2: einen Schnitt durch einen gegenüber dem Hydrostataktor der Figur 1 leicht veränderten Hydrostataktor mit einem Ringkolben,
- Figur 3: einen Schnitt durch einen gegenüber dem Hydrostataktor der Figur 1 leicht veränderten Hydrostataktor mit einer einteiligen Baueinheit aus dem Gehäuse des Geberzylinders und der Hülse des Planetenwälzgetriebes,
- Figur 4: einen Teilschnitt durch einen gegenüber dem Hydrostataktor der Figur 1 leicht veränderten Hydrostataktor mit einem integrierten Nachlaufbehälter,
- Figur 5: einen Schnitt durch einen Hydrostataktor mit einem von einem Planetenwälz getriebe gezogenen Kolben,
- Figur 6: einen Schnitt durch einen Elektromotor eines Hydrostataktors mit unterschied lichen Anordnungsmöglichkeiten einer Sensoreinrichtung
und
- Figur 7: einen Teilschnitt durch einen gegenüber dem Hydrostataktor der Figur 2 leicht veränderten Hydrostataktor mit einem radial innerhalb der Druckkammer angeordneten Nachlaufbehälter.

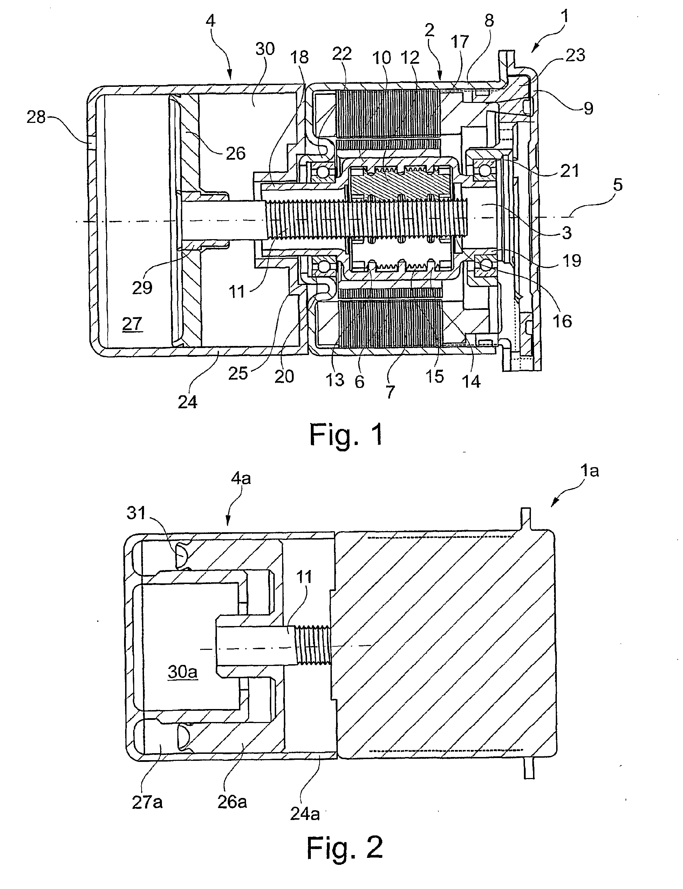

Figur 1 zeigt den Hydrostataktor 1, beispielsweise ein hydrostatischer Kupplungsaktor, im Schnitt mit dem Elektromotor 2, dem Planetenwälzgetriebe 3 und dem Geberzylinder 4, die um die Drehachse 5 des Rotors 6 des Elektromotors 2 angeordnet sind. Der Stator 7 des Elektromotors ist in dem Gehäuse 8 mit dem Deckel 9 fest verbunden. Der Rotor 6 nimmt radial innen das Planetenwälzgetriebe 3 auf, das aus der Hülse 10, der Getriebespindel 11 und den dazwischen abwälzenden, über den Umfang verteilten und an der Hülse 10 verdrehbar befestigten Planetenwälzkörper 12 gebildet wird. Zur Erhöhung der Übersetzung weisen die Planetenwälzkörper 12 eine Grobverzahnung 13, die mit der Innenverzahnung 14 der Hülse 10 verzahnt ist, und Feingewindeabschnitte 15 auf, die auf dem Außengewinde 16 der Getriebespindel 11 abwälzen. Zur Funktion des Planetenwälzgetriebes 3 wird auf die Dokumente EP 0 320 621 A1 und DE 195 40 634 C1 verwiesen.

In dem gezeigten Ausführungsbeispiel ist das Planetenwälzgetriebe 3 koaxial zum Rotor 6 in diesem aufgenommen, wobei sich die Getriebespindel 11 funktionsgemäß bei Verdrehung des Rotors 6 axial verlagert. Hierbei ist die Hülse 10 fest mit dem Rotor 6 verbunden. Der Rotor 6 kann in üblicher Weise aus einem Blechaufbau mit den Permanentmagneten 17 ausgebildet sein, wobei der Blechaufbau mit der Hülse 10 fest verbunden wie verschweißt oder aufgepresst ist. Alternativ können die Permanentmagneten 17 einzeln auf der Hülse 10 aufgebracht, beispielsweise mit dieser verklebt sein, so dass entsprechender Bauraum für den Blechaufbau eingespart wird. Die Hülse 10 übernimmt sowohl die Lagerung des Planetenwälzgetriebes 3 als auch des Rotors 6 gegenüber dem Gehäuse 8. Hierzu weist die vorzugsweise aus Blech gebildete Hülse 10 zwei axiale Ansätze 18, 19 auf, auf denen jeweils ein Wälzlager 20, 21 aufgenommen ist. Das Wälzlager 20 ist axial fest an dem Gehäuseabschnitt 22 des Gehäuses 8 aufgenommen, das Wälzlager 21 wird von einem am Gehäuse 8 zentrierten Einsatz 23 getragen. Die Montage des Rotors 6 mit dem Planetenwälzgetriebe 3 folgt von der geöffneten Seite des Gehäuses 8 aus, die nach Einbau des Rotors 6 mittels des Deckels 9 verschlossen wird.

Der Geberzylinder 4 ist mittels dessen vorzugsweise aus Blech gebildeten Gehäuses 24 fest mit dem Gehäuse 8 des Elektromotors verbunden, beispielsweise verschweißt. Die Zentrierung des Gehäuses 24 gegenüber dem Gehäuse 8 kann beispielsweise an dem Zentrierbund 25 erfolgen. Der Kolben 26 bildet mit dem Gehäuse 24 die Druckkammer 27, die mittels des Druckanschlusses 28, der hier nur als Öffnung angedeutet und entsprechend der erwünschten Anschlussform an eine Druckleitung mit einer Schnellkupplung, einem Schraubanschluss oder dergleichen versehen sein kann. Infolge des in der Druckkammer 27, die vorzugsweise mit flüssigem Druckmittel befüllt ist, bei Verlagerung des Kolbens 26 aufgebauten Drucks wird ein an der anderen Seite der Druckleitung angeschlossener Nehmerzylinder betätigt, der auf eine Tellerfeder, Hebelfeder oder ein anderes Beaufschlagungsmittel einer Reibungskupplung einwirkt und diese je nach Ausführungsform als zwangsweise offene oder geschlossene Reibungskupplung aufdrückt beziehungsweise zudrückt.

Die Druckkammer 27 schließt sich an die vom Elektromotor 2 abgewandte Seite des Kolbens 26 an, so dass diese bei einer Schubbewegung des Kolbens 26 mit Druck beaufschlagt wird. Die Druckbeaufschlagung erfolgt durch die axiale Verlagerung der Gewindespindel 11, die den Kolben 26 an der Axialführung 29 aufnimmt. Dabei ist die Getriebespindel 11 axial fest mit dem Kolben 26 verbunden. Die Druckkammer 27 kann im entspannten Zustand mit einem nicht dargestellten Nachlaufbehälter verbunden sein, der in den gezeigten Bauraum integriert sein kann, beispielsweise in einem bei entspannter Druckkammer 27 zwischen Kolben und Gehäuse 24 freibleibenden, gestrichelt dargestellten Freiraum 30. Eine entsprechende Verbindung, die beispielsweise vom Kolben 26 im zurückgezogenen Zustand freigegeben und bei Komprimierung der Druckkammer 27 bei axialer Verlagerung des Kolbens 26 verschlossen wird, ist nicht dargestellt.

Die Figur 2 zeigt einen gegenüber dem Hydrostataktor 1 der Figur 1 bezüglich der Ausgestaltung des Geberzylinders 4a geänderten Hydrostataktor 1a im Schnitt, wobei der Elektromotor mit dem Planetenwälzgetriebe nicht im Detail dargestellt ist und im Wesentlichen dem Elektromotor 2 mit dem Planetenwälzgetriebe 3 der Figur 1 entspricht. Das Gehäuse 24a des Geberzylinders 4a bildet in dem gezeigten Ausführungsbeispiel eine ringförmige Druckkammer 27a aus, die durch einen entsprechend mit ringförmig ausgebildeter Kolbenfläche 31 ausgebildeten Kolben 26a begrenzt wird. Die Druckkammer 27a ist entsprechend der Druckkammer 27 der Figur 1 an der dem Elektromotor abgewandten Seite angeordnet, so dass die Betätigung des Kolbens 26a in Schubrichtung der Gewindespindel 11 erfolgt. Ein Nachlaufbehälter kann in dem Freiraum 30a radial innerhalb der Druckkammer 27a vorgesehen sein.

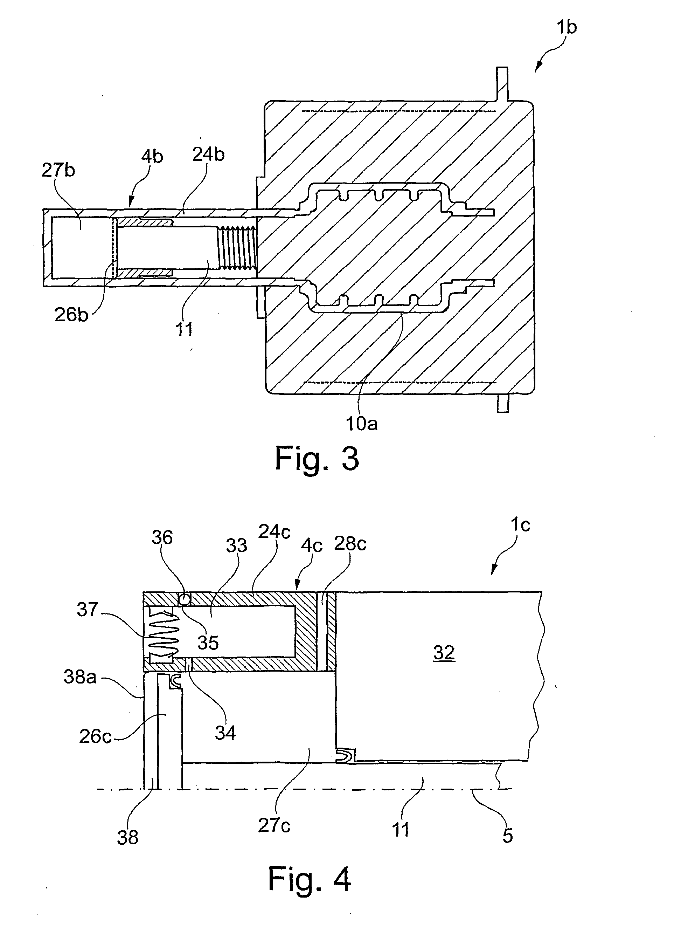

Figur 3 zeigt einen Teilschnitt durch einen Hydrostataktor 1b, bei dem in Abänderung zu den Hydrostataktoren 1, 1a der Figuren 1 und 2 die Hülse 10a des nicht dargestellten Planetenwälzgetriebes und das Gehäuse 24b des Geberzylinders 4b einteilig, vorzugsweise aus Blech beispielsweise mittels eines Tiefziehverfahrens hergestellt sind. Am stirnseitigen Ende des Gehäuses 24b ist die mittels des Kolbens 26b begrenzte Druckkammer 27b gebildet. Der Kolben 26b kann direkt an die Getriebespindel 11 angeformt oder mit diesem verbunden sein. Die vorliegende Drehzahldifferenz zwischen dem Kolben 26b und der Getriebespindel 11 wird durch die dynamische Dichtung, beispielsweise eine Dichtung mit Dichtlippe ausgeglichen. Alternativ oder zusätzlich kann zwischen den Kolben und den Getriebespindeln der Hydrostataktoren eine axial feste jedoch verdrehbare Anbindung vorgesehen sein. Weiter kann die Getriebespindel verdrehgesichert an einem festen Gehäuseteil wie Gehäuse 24b angeordnet sein.

Die Figur 4 zeigt einen Teilschnitt oberhalb der Drehachse 5 des Hydrostataktors 1c, bei dem der Aufbau des Geberzylinders 4c gegenüber den Hydrostataktoren 1, 1 a, 1 b der Figuren 1 bis 3 verändert ist. Bei dem gezeigten Hydrostataktor 1 c ist die vom Kolben 26c und dem Gehäuse 24c gebildete Druckkammer 27c mit dem Druckanschluss 28c axial zwischen dem Kolben 26c und der von dem Elektromotor und dem Planetenwälzgetriebe gebildeten Baueinheit 32 angeordnet, so dass in dieser Druck aufgebaut wird, wenn der Kolben 26c von der Getriebespindel 11 in Richtung Baueinheit 32 axial verlagert wird. Dementsprechend wird der Druck in Zugrichtung des Kolbens 26c aufgebaut, so dass der Geberzylinder 4c gegen die Baueinheit 32 verspannt wird und bezüglich der statischen Auslegung des Hydrostataktors 1 c Vorteile erzielt werden können. Der Nachlaufbehälter 33 ist in das Gehäuse 24c integriert und radial außerhalb der Druckkammer 27c vorgesehen. Im entspannten Zustand der Druckkammer 27c steht das Volumen des Nachlaufbehälters 33 über die Nachlauföffnung 34 wie Schnüffelbohrung in Verbindung, so dass ein Ausgleich des Druckmittels erfolgen kann und gegebenenfalls aus dem Nehmerzylinder und der Druckleitung in die Druckkammer 27c eingespülten Luftblasen in den Nachlaufbehälter 33 transportiert werden. Der Nachlaufbehälter 33 wird über die Befüllöffnung 35 befüllt, die beispielsweise - wie gezeigt - mit der Kugel 36 verschlossen ist. Der Druckausgleich des Nachlaufbehälters 33 erfolgt mittels der lediglich schematisch dargestellten Membran 37, die als Balg auch mit axialer Faltung ausgeführt sein kann. Ein Überdruck des Nachlaufbehälters 33 kann gegebenenfalls mittels einer - nicht dargestellten - flüssigkeitsdichten Öffnung wie Labyrinth- und/oder Membranöffnung ausgeglichen werden. Die im Gehäuse 24c zur Bildung der Druckkammer vorgesehene Öffnung 38 wird insbesondere zur Vermeidung von Schmutzeintrag mit einer Abdeckung 38a wie Membran oder Balg versehen.

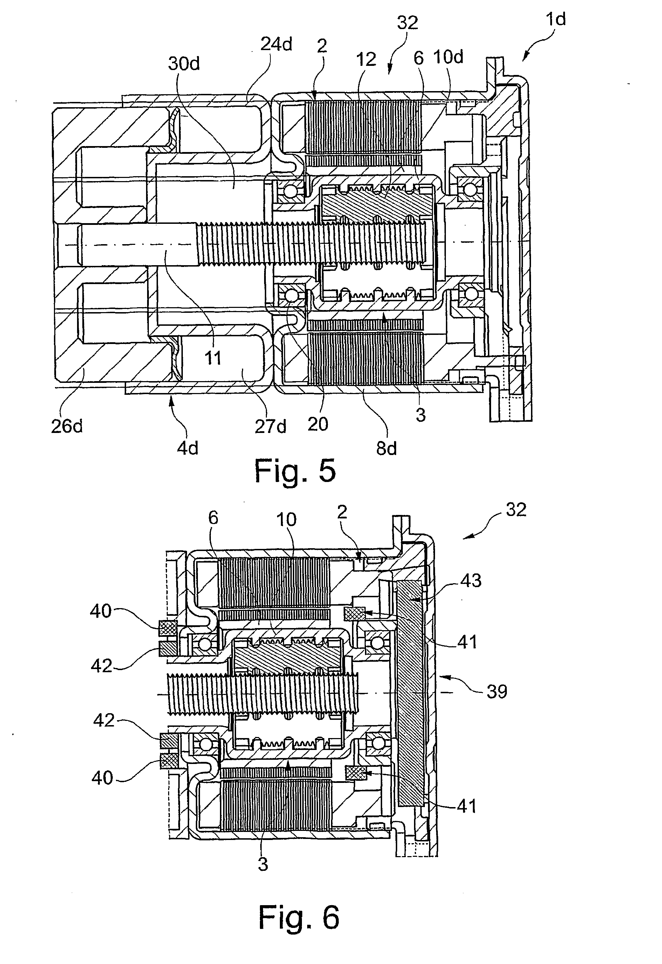

Figur 5 zeigt eine alternative Ausgestaltung in Form des Hydrostataktors 1d gegenüber dem Hydrostataktor 1c der Figur 4 im Schnitt. Hierbei ist die Baueinheit 32 im Wesentlichen identisch mit der aus dem Elektromotor 2 und dem Planetenwälzgetriebe 3 der Figur 1 gebildeten Baueinheit. Infolge der Betätigung des Kolbens 26d in Zugrichtung der Getriebespindel 11 kann die axiale Abstützung des Planetenwälzgetriebes 3 gegen die auf die Druckkammer 27d wirkende Druckkraft gehäuseseitig, beispielsweise an dem Gehäuse 24d des Geberzylinders 4d abgestützt werden, so dass der Kraftfluss nicht über den Elektromotor 2 erfolgt. Dabei wird in dem gezeigten Ausführungsbeispiel bei einer Druckbeaufschlagung der Druckkammer 27d durch den Kolben 26d die mit dem Rotor 6 fest verbundene Hülse 10d über das Wälzlager 20 axial gegen den Anschlag des Gehäuses 8d verspannt, das mit dem Gehäuse 24d des Geberzylinders fest verbunden ist, so dass der Kraftfluss von der Hülse 10d über die Planetenwälzkörper 12 und die Gewindespindel 11 in den Kolben 26d und von dort über das Gehäuse 24d, das Gehäuse 8d über das Wälzlager 20 zur Hülse 10d geschlossen wird. In dem Freiraum 30d kann radial innerhalb der Druckkammer 27d ein nicht dargestellter Nachlaufbehälter untergebracht werden.

Figur 6 zeigt die Baueinheit 32 von Hydrostataktoren mit dem Elektromotor 2 und dem Planetenwälzgetriebe 3 sowie die mögliche Anordnung der Sensoreinrichtung 39 zur Erfassung der Drehzahlen des Rotors 6 beziehungsweise der Hülse 10. Die Darstellung zeigt zwei Positionierungsvarianten von Sensoren 40 und 41. Die Sensoren 40, 41 können als Hall-Sensoren ausgebildet sein, wobei gegebenenfalls diese Sensormagneten 42 an dem gegenüber diesen verdrehbaren Bauteil angeordnet sein können. Die Sensoren 40, 41 können aktiv oder passiv betrieben werden, eine Vorortelektronik 43 kann zwischen den Sensoren 40, 41 und einem nicht dargestellten Steuergerät vorgesehen sein, die beispielsweise niederohmige und standardisierte Daten aus den aus den Sensoren 40, 41 gewonnenen Rohdaten erzeugt und diese an das Steuergerät weiterleitet. Mittels der gewonnenen Daten kann der als bürstenloser Motor ausgebildete Elektromotor 2 kommutiert und/oder über die bekannte Übersetzung des Planetenwälzgetriebes 3 der axiale Hub des Kolbens bestimmt werden. Weiterhin kann die Sensoreinrichtung 39 im Falle einer nicht schlupffreien Ausführung des Planetenwälzgetriebes 3 einen Schlupf erkennen und dieser im Steuergerät ausgewertet und kompensiert werden. Weiterhin kann die Sensoreinrichtung 39 einen Drucksensor zur Ermittlung des Drucks in der Druckkammer des Geberzylinders enthalten. In speziellen Fällen kann ein Wegmesssystem des Kolbens vorgesehen sein.

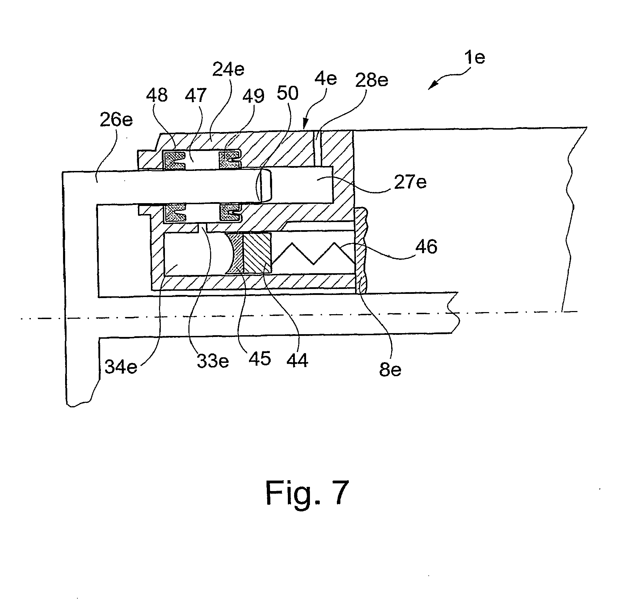

Figur 7 zeigt einen oberhalb der Drehachse 5 dargestellten, schematischen Teilschnitt des dem Hydrostataktor 1d der Figur 5 ähnlichen Hydrostataktors 1e. Im Unterschied zu diesem ist der Geberzylinder 4e mit einem radial innerhalb der von dem Kolben 26e und dem Gehäuse 24e gebildeten Druckkammer 27e mit dem Druckanschluss 28e angeordneten Nachlaufbehälter 33e versehen. Der Nachlaufbehälter 33e ist hydrostatisch unterhalb der Druckkammer 27e angeordnet, so dass der Nachlaufbehälter 33e zur Sicherstellung eines gegebenenfalls notwendigen Nachlaufs des Druckmittels in die Druckkammer vorgespannt ist. Hierzu wird das Volumen des Nachlaufbehälters von dem mit der Dichtung 45 versehenen Kolben 44 vorgespannt, wobei zwischen dem Kolben 44 und dem Gehäuse 24e beziehungsweise dem mit diesem verbundenen Gehäuse 8e des Elektromotors der Energiespeicher 46, beispielsweise in Form einer Druckfeder oder dergleichen verspannt ist. Über die Nachlauföffnung 34e gelangt das nachfließende Druckmittel in einen Dichtungsabschnitt 47 des Gehäuses 24e in dem der Kolben 26e einerseits mittels der Dichtung wie Nutringdichtung 48 nach außen und andererseits gegenüber der Druckkammer 27e mittels der Dichtung wie Nutringdichtung 49 abgedichtet wird. Wird der Kolben 26e in die druckentlastete Position des Geberzylinders verlagert, übergreifen die am Kolben 26e vorgesehenen Schnüffelnuten 50 die Nutringdichtung 49 und schalten eine Verbindung zwischen dem Nachlaufbehälter 33e und der Druckkammer 27e frei, über die gegebenenfalls Druckmittel ausgetauscht werden kann.

### Bezugszeichenliste

- 1: Hydrostataktor
- 1a: Hydrostataktor
- 1b: Hydrostataktor
- 1c: Hydrostataktor
- 1d: Hydrostataktor
- 1e: Hydrostataktor
- 2: Elektromotor
- 3: Planetenwälzgetriebe
- 4: Geberzylinder
- 4a: Geberzylinder
- 4b: Geberzylinder
- 4c: Geberzylinder
- 4d: Geberzylinder
- 4e: Geberzylinder
- 5: Drehachse
- 6: Rotor
- 7: Stator
- 8: Gehäuse
- 8d: Gehäuse
- 8e: Gehäuse
- 9: Deckel
- 10: Hülse
- 10a: Hülse
- 10d: Hülse
- 11: Getriebespindel
- 12: Planetenwälzkörper
- 13: Grobverzahnung
- 14: Innenverzahnung
- 15: Feingewindeabschnitt
- 16: Außengewinde
- 17: Permanentmagnet
- 18: Ansatz
- 19: Ansatz
- 20: Wälzlager
- 21: Wälzlager
- 22: Gehäuseabschnitt
- 23: Einsatz
- 24: Gehäuse
- 24a: Gehäuse
- 24b: Gehäuse
- 24c: Gehäuse
- 24d: Gehäuse
- 24e: Gehäuse
- 25: Zentrierbund
- 26: Kolben
- 26a: Kolben
- 26b: Kolben
- 26c: Kolben
- 26d: Kolben
- 26e: Kolben
- 27: Druckkammer
- 27a: Druckkammer
- 27b: Druckkammer
- 27c: Druckkammer
- 27d: Druckkammer
- 27e: Druckkammer
- 28: Druckanschluss
- 28c: Druckanschluss
- 28e: Druckanschluss
- 29: Axialführung
- 30: Freiraum
- 30a: Freiraum
- 30d: Freiraum
- 31: Kolbenfläche
- 32: Baueinheit
- 33: Nachlaufbehälter
- 33e: Nachlaufbehälter
- 34: Nachlauföffnung
- 34e: Nachlauföffnung
- 35: Befüllöffnung
- 36: Kugel
- 37: Membran
- 38: Öffnung
- 38a: Abdeckung
- 39: Sensoreinrichtung
- 40: Sensor
- 41: Sensor
- 42: Sensormagnet
- 43: Vorortelektronik
- 44: Kolben
- 45: Dichtung
- 46: Energiespeicher
- 47: Dichtungsabschnitt
- 48: Nutringdichtung
- 49: Nutringdichtung
- 50: Schnüffelnut

## Patentansprüche

1. Hydrostataktor (1c, 1d, 1e) mit einem einen Drehantrieb in eine Axialbewegung wandelnden Getriebe sowie mit einem das Getriebe drehantreibenden Elektromotor (2) mit einem Stator (7) und einem Rotor (6), mit einem Geberzylinder (4c, 4d, 4e) enthaltend ein Gehäuse (24c, 24d, 24e) und einen in dem Gehäuse (24c, 24d, 24e) durch das Getriebe axial verlagerbaren, eine Druckkammer (27c, 27d, 27e) mit Druck beaufschlagenden Kolben (26c, 26d, 26e),**dadurch gekennzeichnet, dass** die Druckkammer (27c, 27d, 27e) bezogen auf eine Drehachse (5) des Elektromotors (2) axial zwischen Kolben (26c, 26d, 26e) und Elektromotor (2) angeordnet ist, bei Verlagerung des Kolbens (26) Druck in der Druckkammer (27c, 27d, 27e) aufgebaut wird, und der Hydrostataktor (1c, 1d, 1e) wenigstens zur Betätigung einer Reibungskupplung anwendbar ist.

2. Hydrostataktor (1, 1 a, 1 b) mit einem einen Drehantrieb in eine Axialbewegung wandelnden Getriebe sowie mit einem das Getriebe drehantreibenden Elektromotor (2) mit einem Stator (7) und einem Rotor (6), mit einem Geberzylinder (4, 4a, 4b) enthaltend ein Gehäuse (24, 24a, 24b) und einen in dem Gehäuse (24, 24a, 24b) durch das Getriebe axial verlagerbaren, eine Druckkammer (27, 27a, 27b) mit Druck beaufschlagenden Kolben (26, 26a, 26b), wobei der Kolben (26, 26a, 26b) bezogen auf eine Drehachse (5) des Elektromotors (2) axial zwischen Druckammer (27, 27a, 27b) und Elektromotor (2) angeordnet ist, bei Verlagerung des Kolbens (26) Druck in der Druckkammer (27, 27a, 27b) aufgebaut wird, und der Hydrostataktor (1, 1a, 1 b) wenigstens zur Betätigung einer Reibungskupplung anwendbar ist, **dadurch gekennzeichnet, dass** in diesem ein Nachlaufbehälter (33, 33e) für ein hydrostatisches Druckmittel bauraumneutral in dem von dem Elektromotor (2), dem Getriebe und dem Gehäuse (24, 24a, 24b) des Geberzylindes (4, 4a, 4b) vorgegebenen Bauraums integriert ist.

3. Hydrostataktor (1, 1 a, 1b, 1 c, 1 d, 1 e) nach Anspruch 1 oder 2, **dadurch gekennzeichnet, dass** das Getriebe aus einem Planetenwälzgetriebe (3) mit einer den Kolben (26, 26a, 26b, 26c, 26d, 26e) axial verlagernden, entlang der Drehachse (5) angeordneten Gewindespindel (11), einer koaxial zu dieser angeordneten drehangetriebenen Hülse (10, 10a, 10d) und zwischen diesen abwälzenden Planetenwälzkörper (12) gebildet ist.

4. Hydrostataktor (1, 1a, 1b, 1c, 1d, 1e) nach einem der Ansprüche 1 bis 3, **dadurch gekennzeichnet, dass** das Getriebe radial innerhalb des Rotors (6) angeordnet ist.

5. Hydrostataktor (1, 1a, 1b, 1c, 1d, 1e) nach Anspruch 4, **dadurch gekennzeichnet, dass** der Rotor (6) auf dem Getriebe gelagert ist.

6. Hydrostataktor (1, 1a, 1b, 1c, 1d, 1e) nach einem der Ansprüche 1 bis 5, **dadurch gekennzeichnet, dass** das Getriebe in den Rotor (6) integriert ist.

7. Hydrostataktor nach einem der Ansprüche 1 bis 3, **dadurch gekennzeichnet, dass** die Druckkammer radial außerhalb des Getriebes angeordnet ist und der Elektromotor axial benachbart zu der Druckkammer angeordnet ist und einen kleineren Durchmesser als den Außendurchmesser der Druckkammer aufweist.

8. Hydrostataktor (1c, 1e) nach einem der Ansprüche 1 und 3 bis 7, **dadurch gekennzeichnet, dass** in diesem ein Nachlaufbehälter (33, 33e) für ein hydrostatisches Druckmittel integriert ist.

9. Hydrostataktor (1e) nach Anspruch 8, **dadurch gekennzeichnet, dass** der Nachlaufbehälter (33e) vorgespannt ist.

10. Hydrostataktor (1e) nach Anspruch 8 oder 9, **dadurch gekennzeichnet, dass** der Nachlaufbehälter (33e) radial innerhalb einer ringförmig ausgebildeten Druckkammer (27e) angeordnet ist.

11. Hydrostataktor nach Anspruch 10, **dadurch gekennzeichnet, dass** eine Gewindespindel des Getriebes während einer Verlagerung des Kolbens zumindest teilweise axial in den Nachlaufbehälter eingreift.

12. Hydrostataktor nach Anspruch 8 oder 9, **dadurch gekennzeichnet, dass** der Nachlaufbehälter radial außerhalb einer ringförmig ausgebildeten Druckkammer angeordnet ist.

13. Hydrostataktor nach einem der Ansprüche 1 bis 12, **dadurch gekennzeichnet, dass** zwischen dem Gehäuse und dem Kolben eine Leckagedichtung angeordnet ist.

14. Hydrostataktor nach einem der Ansprüche 1 bis 12, **dadurch gekennzeichnet, dass** zwischen dem Gehäuse und dem Getriebe eine Leckagedichtung angeordnet ist.

15. Hydrostataktor nach Anspruch 14, **dadurch gekennzeichnet, dass** die Leckagedichtung zwischen einer Getriebespindel des Getriebes und dem Gehäuse angeordnet ist.

16. Hydrostataktor (1 b) nach einem der Ansprüche 3 bis 15, **dadurch gekennzeichnet, dass** das Gehäuse (24b) und die Hülse (10a) einteilig ausgebildet sind.

17. Hydrostataktor nach einem der Ansprüche 1 bis 16, **dadurch gekennzeichnet, dass** eine Sensoreinrichtung (39) zur Steuerung des Elektromotors (2) an der das Gehäuse des Geberzylinders aufnehmenden Stirnseite gegenüberliegenden Stirnseite angeordnet ist.

18. Hydrostataktor nach einem der Ansprüche 1 bis 16, **dadurch gekennzeichnet, dass** eine Sensoreinrichtung (39) zur Steuerung des Elektromotors an der das Gehäuse des Geberzylinders aufnehmenden Stirnseite angeordnet ist.

## Claims

1. Hydrostatic actuator (1c, 1d, 1e) with a gear converting a rotary drive into an axial movement and with an electric motor (2) driving the gear in rotation and having a stator (7) and a rotor (6), with a master cylinder (4c, 4d, 4e) containing a housing (24c, 24d, 24e) and a piston (26c, 26d, 26e) axially displaceable in the housing (24c, 24d, 24e) by means of the gear and acting with pressure upon a pressure chamber (27c, 27d, 27e), **characterized in that** the pressure chamber (27c, 27d, 27e) is arranged axially between the piston (26c, 26d, 26e) and the electric motor (2) in relation to an axis of rotation (5) of the electric motor (2), pressure is built up in the pressure chamber (27c, 27d, 27e) during the displacement of the piston (26), and the hydrostatic actuator (1c, 1d, 1e) can be used at least for actuating a friction clutch.

2. Hydrostatic actuator (1, 1a, 1b) with a gear converting a rotary drive into an axial movement and with an electric motor (2) driving the gear in rotation and having a stator (7) and a rotor (6), with a master cylinder (4, 4a, 4b) containing a housing (24, 24a, 24b) and a piston (26, 26a, 26b) axially displaceable in the housing (24, 24a, 24b) by means of the gear and acting with pressure upon a pressure chamber (27, 27a, 27b), the piston (26, 26a, 26b) being arranged axially between the pressure chamber (27, 27a, 27b) and the electric motor (2) in relation to an axis of rotation (5) of the electric motor (2), pressure being built up in the pressure chamber (27, 27a, 27b) during the displacement of the piston (26), and the hydrostatic actuator (1, 1a, 1b) being capable of being used at least for actuating a friction clutch, **characterized in that**, in the said hydrostatic actuator, a replenishing tank (33, 33e) for a hydrostatic pressure medium is integrated, neutrally in terms of construction space, in the construction space predetermined by the electric motor (2), the gear and the housing (24, 24a, 24b) of the master cylinder (4, 4a, 4b).

3. Hydrostatic actuator (1, 1a, 1b, 1c, 1d, 1e) according to Claim 1 or 2, **characterized in that** the gear is formed from a planetary rolling gear (3) with a threaded spindle (11) axially displacing the piston (26, 26a, 26b, 26c, 26d, 26e) and arranged along the axis of rotation (5), with a rotationally driven sleeve (10, 10a, 10d) arranged coaxially with respect to the said threaded spindle and with planetary rolling bodies (12) rolling between these.

4. Hydrostatic actuator (1, 1a, 1b, 1c, 1d, 1e) according to one of Claims 1 to 3, **characterized in that** the gear is arranged radially inside the rotor (6).

5. Hydrostatic actuator (1, 1a, 1b, 1c, 1d, 1e) according to Claim 4, **characterized in that** the rotor (6) is mounted on the gear.

6. Hydrostatic actuator (1, 1a, 1b, 1c, 1d, 1e) according to one of Claims 1 to 5, **characterized in that** the gear is integrated in the rotor (6).

7. Hydrostatic actuator according to one of Claims 1 to 3, **characterized in that** the pressure chamber is arranged radially outside the gear, and the electric motor is arranged axially adjacently to the pressure chamber and has a smaller diameter than the outside diameter of the pressure chamber.

8. Hydrostatic actuator (1c, 1e) according to one of Claims 1 and 3 to 7, **characterized in that** a replenishing tank (33, 33e) for a hydrostatic pressure medium is integrated in this.

9. Hydrostatic actuator (1e) according to Claim 8, **characterized in that** the replenishing tank (33e) is prestressed.

10. Hydrostatic actuator (1e) according to Claim 8 or 9, **characterized in that** the replenishing tank (33e) is arranged radially inside a pressure chamber (27e) of ring-shaped form.

11. Hydrostatic actuator according to Claim 10, **characterized in that** a threaded spindle of the gear engages at least partially axially in the replenishing tank during a displacement of the piston.

12. Hydrostatic actuator according to Claim 8 or 9, **characterized in that** the replenishing tank is arranged radially outside a pressure chamber of ring-shaped form.

13. Hydrostatic actuator according to one of Claims 1 to 12, **characterized in that** a leakage seal is arranged between the housing and the piston.

14. Hydrostatic actuator according to one of Claims 1 to 12, **characterized in that** a leakage seal is arranged between the housing and the gear.

15. Hydrostatic actuator according to Claim 14, **characterized in that** the leakage seal is arranged between a threaded spindle of the gear and the housing.

16. Hydrostatic actuator (1b) according to one of Claims 3 to 15, **characterized in that** the housing (24b) and the sleeve (10a) are formed in one part.

17. Hydrostatic actuator according to one of Claims 1 to 16, **characterized in that** a sensor device (39) for controlling the electric motor (2) is arranged on the end face lying opposite the end face accommodating the housing of the master cylinder.

18. Hydrostatic actuator according to one of Claims 1 to 16, **characterized in that** a sensor device (39) for controlling the electric motor is arranged on the end face accommodating the housing of the master cylinder.

## Revendications

1. Actionneur hydrostatique (1c, 1d, 1e) comprenant une transmission convertissant un entraînement en rotation en un mouvement axial et comprenant un moteur électrique (2) entraînant en rotation la transmission, avec un stator (7) et un rotor (6), comprenant un maître-cylindre (4c, 4d, 4e) contenant un boîtier (24c, 24d, 24e) et un piston (26c, 26d, 26e) pouvant être déplacé axialement par la transmission dans le boîtier (24c, 24d, 24e), sollicitant en pression une chambre de pression (27c, 27d, 27e), **caractérisé en ce que** la chambre de pression (27c, 27d, 27e) est disposée par rapport à un axe de rotation (5) du moteur électrique (2) axialement entre le piston (26c, 26d, 26e) et le moteur électrique (2), la pression augmentant dans la chambre de pression (27c, 27d, 27e) lors du déplacement du piston (26), et l'actionneur hydrostatique (1c, 1d, 1e) pouvant être utilisé au moins pour actionner un embrayage à friction.

2. Actionneur hydrostatique (1, 1a, 1b) comprenant une transmission convertissant un entraînement en rotation en un mouvement axial et comprenant un moteur électrique (2) entraînant en rotation la transmission, avec un stator (7) et un rotor (6), comprenant un maître-cylindre (4, 4a, 4b) contenant un boîtier (24, 24a, 24b) et un piston (26, 26a, 26b) pouvant être déplacé axialement par la transmission dans le boîtier (24, 24a, 24b), sollicitant en pression une chambre de pression (27, 27a, 27b), le piston (26, 26a, 26b) étant disposé par rapport à un axe de rotation (5) du moteur électrique (2) axialement entre la chambre de pression (27, 27a, 27b) et le moteur électrique (2), la pression augmentant dans la chambre de pression (27, 27a, 27b) lors du déplacement du piston (26), et l'actionneur hydrostatique (1, 1a, 1b) pouvant être utilisé au moins pour actionner un embrayage à friction, **caractérisé en ce que** dans celui-ci un récipient d'alimentation (33, 33e) pour un fluide sous pression hydrostatique est intégré de manière neutre du point de vue de l'espace de construction dans l'espace de construction prédéfini par le moteur électrique (2), la transmission et le boîtier (24, 24a, 24b) du maître-cylindre (4, 4a, 4b).

3. Actionneur hydrostatique (1, 1a, 1b, 1c, 1d, 1e) selon la revendication 1 ou 2, **caractérisé en ce que** la transmission est formée d'une transmission à roulements planétaires (3) avec une broche filetée (11) déplaçant axialement le piston (26, 26a, 26b, 26c, 26d, 26e), disposée le long de l'axe de rotation (5), d'une douille (10, 10a, 10d) entraînée en rotation et disposée coaxialement par rapport à celle-ci, et de corps de roulement planétaires (12) roulant entre celles-ci.

4. Actionneur hydrostatique (1, 1a, 1b, 1c, 1d, 1e) selon l'une quelconque des revendications 1 à 3, **caractérisé en ce que** la transmission est disposée radialement à l'intérieur du rotor (6).

5. Actionneur hydrostatique (1, 1a, 1b, 1e, 1d, 1e) selon la revendication 4, **caractérisé en ce que** le rotor (6) est monté sur la transmission.

6. Actionneur hydrostatique (1, 1a, 1b, 1c, 1d, 1e) selon l'une quelconque des revendications 1 à 5, **caractérisé en ce que** la transmission est intégrée dans le rotor (6).

7. Actionneur hydrostatique selon l'une quelconque des revendications 1 à 3, **caractérisé en ce que** la chambre de pression est disposée radialement à l'extérieur de la transmission et le moteur électrique est disposé axialement à côté de la chambre de pression et présente un plus petit diamètre que le diamètre extérieur de la chambre de pression.

8. Actionneur hydrostatique (1c, 1e) selon l'une quelconque des revendications 1 et 3 à 7, **caractérisé en ce qu'**un récipient d'alimentation (33, 33e) pour un fluide sous pression hydrostatique est intégré dans celui-ci.

9. Actionneur hydrostatique (1e) selon la revendication 8, **caractérisé en ce que** le récipient d'alimentation (33e) est précontraint.

10. Actionneur hydrostatique (1e) selon la revendication 8 ou 9, **caractérisé en ce que** le récipient d'alimentation (33e) est disposé radialement à l'intérieur d'une chambre de pression (27e) réalisée sous forme annulaire.

11. Actionneur hydrostatique selon la revendication 10, **caractérisé en ce qu'**une broche filetée de la transmission vient en prise au moins en partie axialement dans le récipient d'alimentation pendant un déplacement du piston.

12. Actionneur hydrostatique selon la revendication 8 ou 9, **caractérisé en ce que** le récipient d'alimentation est disposé radialement à l'extérieur d'une chambre de pression réalisée sous forme annulaire.

13. Actionneur hydrostatique selon l'une quelconque des revendications 1 à 12, **caractérisé en ce qu'**un joint d'étanchéité contre les fuites est disposé entre le boîtier et le piston.

14. Actionneur hydrostatique selon l'une quelconque des revendications 1 à 12, **caractérisé en ce qu'**un joint d'étanchéité contre les fuites est disposé entre le boîtier et la transmission.

15. Actionneur hydrostatique selon la revendication 14, **caractérisé en ce que** le joint d'étanchéité contre les fuites est disposé entre une broche filetée de la transmission et le boîtier.

16. Actionneur hydrostatique (1b) selon l'une quelconque des revendications 3 à 15, **caractérisé en ce que** le boîtier (24b) et la douille (10a) sont réalisés d'une seule pièce.

17. Actionneur hydrostatique selon l'une quelconque des revendications 1 à 16, **caractérisé en ce qu'**un dispositif de capteur (39) pour la commande du moteur électrique (2) est disposé du côté frontal opposé au côté frontal recevant le boîtier du maître-cylindre.

18. Actionneur hydrostatique selon l'une quelconque des revendications 1 à 16, **caractérisé en ce qu'**un dispositif de capteur (39) pour la commande du moteur électrique est disposé du côté frontal recevant le boîtier du maître-cylindre.
